# EUROPEAN PATENT SPECIFICATION

(11) **EP 2 495 844 B1**
(45) Date of publication and mention of the grant of the patent: **13.11.2013**
(21) Application number: 11157044.6
(22) Date of filing: 04.03.2011
(51) Int. Cl.: H02J 7/00, B60L 11/18, G06Q 20/18, G06Q 50/06, G07C 5/00, G07F 15/00

(54) **Method and system for controlling a network of charging spots for electrical cars**
Verfahren und System zur Steuerung eines Aufladestellennetzwerks für elektrische Fahrzeuge
Procédé et système de contrôle d'un réseau de chargement de spots pour voitures électriques

(43) Date of publication of application: 05.09.2012
(73) Proprietor: Siemens Aktiengesellschaft, 80333 München (DE)
(72) Inventor: Fishkin, Alexey, 81737 München (DE); Heller, Hans, 81669 München (DE)

(56) References cited:
- US-A1- 2002 132 144
- US-A1- 2010 231 160
- US-A1- 2010 237 985
- US-A1- 2011 025 267

## Description

### FIELD OF THE INVENTION

The present invention relates generally to the field of electrical power distribution and dispensing, and more particularly to an apparatus, method and computer program product for dispensing electrical power to recharge electric and hybrid vehicles having rechargeable batteries.

### BACKGROUND OF THE INVENTION

Electric vehicles, in particular electric cars, have recently attracted increased attention. Particularly due to the development of accumulator technology and the increasing prices of fossil fuels, vehicles with purely electric drive are an alternative to conventional vehicles. In this context, an increased number of registered electric vehicles is to be expected in the next few years.

In order to be able to operate such vehicles, charging stations are necessary, which serve to supply power, specifically to charge the accumulators of the electrical vehicles.

Currently vehicles simply "plug in" to the electric power grid to recharge their batteries. While it is certainly possible to charge a vehicle at an owner's residence, this in many cases is inconvenient. For example, if an owner wishes to take a road trip in an electric vehicle, along the way, he or she may need to recharge batteries. In an apartment complex, different residents may want to charge their vehicles at the same time. Some cars are hybrid having both an electric motor and an internal combustion engine. Recharging can take place from the internal combustion engine and from waste energy recovered from braking; however, this may be more expensive than simply buying electricity at a public or private electric car charging station.

It is advantageous to have an apparatus and method for distributing electricity, keeping track of who is buying the electrical energy, charging the electric car users for the service by perhaps billing a credit card, or identifying particular users of a group charging station such as an apartment complex by some method of identification, so that users can be individually billed.

Currently, solutions that rely on a centralized architecture for the electrical energy distribution network are proposed, wherein a central computing device manages in a centralized way the operation of the dedicated network of charging stations. Unfortunately, if this central computing device becomes un-operational, the entire network it manages becomes disabled.

In US2011/025267 A1, a method for controlling the function of a heterogeneous network for charging electrical cars is disclosed, wherein said network comprises a plurality of electrical car charging stations, and wherein each of said plurality of electrical car charging stations is in possession of a limited amount of options to charge electrical power and capable of communicating with other charging stations. The method comprises receiving a request for charging an electrical car at at least one of said electrical car charging stations and assessing by said at least one of said electrical car charging stations if the electrical car charging station possesses sufficient options to meet the request.

What is necessary are novel methods for controlling the networks for electrical car charging, that permit the uninterrupted and reliable electrical energy dispensation to the electrical car users.

### SUMMARY OF THE INVENTION

The present invention provides a solution to the above problems by providing the method for controlling the functioning of a heterogeneous network for charging electrical cars of claim 1, the heterogeneous network for charging electrical cars of claim 12, and the system of claim 13.

In accordance with one embodiment of the present invention it is envisioned a method for controlling the functioning of a heterogeneous network for charging electrical cars as described in independent patent claim 1.

In accordance with another embodiment of the present invention it is envisioned a heterogeneous network for charging electrical cars as described in independent patent claim 12.

Compared to other solutions offered in the art, the solution provided by the present invention offers the advantage of simplicity of implementation since the heterogeneous network for charging electrical cars does not need to be provided with a central control computer. The present network for charging electrical cars relies on a simple protocol that implies a small number of steps executed by a method that requests the options to charge the car, grants the option to charge the car, and returns the option to charge the car.

The network for charging electrical cars is also characterized by robustness since the breakdown of stations induces only that options at these stations are unavailable. The network for charging electrical cars of the present invention is further characterized by locality since each station has to communicate only with its direct neighbours, and no global communication is necessary. Implicitly the decisions regarding electrical energy availability are also local decisions.

Other characteristics and advantages of the present invention will be apparent in connection with the dependent claims.

In accordance with the present invention, the method of the invention is further characterized by the fact that the stations-that loaned their options are either unavailable till the loaned options are returned, or the stations attempt to borrow options from the other car charging stations. The request for charging an electrical car comprises at least one of the amount of electrical energy required, the desired time frame for charging the electrical car, cost indicators for the electrical power, information regarding the mode of payment. The information received by the at least one electrical car charging station from other electrical car charging stations comprises the amount of options available, a time frame for the options' availability, cost indicators for the available options, and/or a preferred mode of payment for the loaned options. The plurality of selection criteria is set by a user of the electrical car. The set of selection criteria comprises at least one of the user's preference for clean energy, the user's preferred mode of payment, the user's belonging to a selected group of users, a time frame and power level at which the electrical car is to be charged. The method further comprises balancing the heterogeneous network for charging electrical cars. The step of interrogating other electrical charging stations regarding their availability of options to charge comprises sending an inquiry to other electrical charging stations in the heterogeneous network for charging electrical cars. Each interrogated electrical car charging station shares with the at least one other electrical car charging station a power supply cable. The step of collecting the information comprises exchanging information via mobile communication, and/or an available network. The electrical charging stations facilities are arranged in a peer to peer communication network.

### DESCRIPTION OF THE DRAWINGS

For a more complete understanding of the present invention, the objects and advantages thereof, reference is now made to the following descriptions taken in conjunction with the accompanying drawings, in which:
FIG. 1 shows a configuration known from the art of a centralized network for dispensing electrical energy via a central station controlling several remote power dispensing stations.
FIG. 2 shows a view of an exemplary public or private service electrical car charging outlet that can provide electric power to charge an electric vehicle.
FIG. 3 shows a small private charging device that could be used in a smaller, more private environment such as an apartment complex.
FIG. 4 shows an exemplary block diagram of electric car charging station that can provide electric charging service.
Fig. 5 illustrates a network for charging electrical cars, as proposed in accordance with an embodiment of the present invention.
Fig. 6 is a flow chart representation of the method for controlling the functioning of a heterogeneous network of charging stations for electric cars, in accordance with an embodiment of the present invention.

Non-limiting and non-exhaustive embodiments of the present invention are described with reference to the above referenced figures, wherein like reference numerals refer to like parts throughout the various views unless otherwise specified. The order of description should not be construed as to imply that these operations are necessarily order- dependent.

### DETAILED DESCRIPTION OF THE INVENTION

As will be appreciated by one skilled in the art, the present disclosure may be embodied as a model, method, system or computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "network", "electrical car charging network", "charging station", ... "circuit," "module" or "system."

The present disclosure is described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

In the present description, by options to charge is understood at least the right to charge electrical power in a certain predefined amount. Further, by amount of options is understood the amount of power the charging station can dispense to an electrical car to charge.

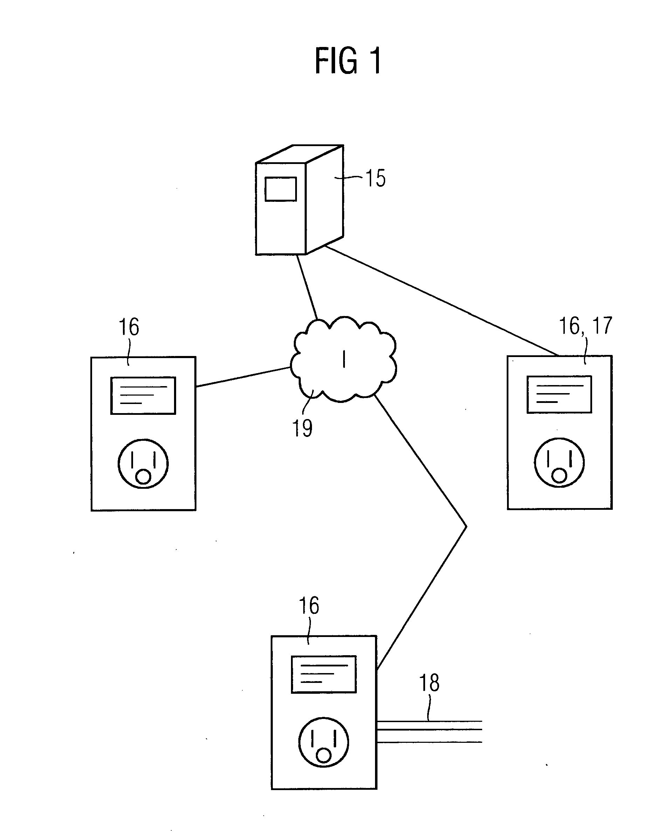

Referring now to FIG. 1, FIG. 1 shows a configuration known from the art of a centralized network for dispensing electrical energy via a central station controlling several remote electrical power dispensing stations.

FIG. 1 shows a system with a central control computer 15 with communication over a network (such as the Internet) 19 with several electric power dispensing stations 16. All power dispensing stations are provided power via a common cable 18. The central computer 15 may maintain user or subscriber accounts. As each charging station 16 dispenses power, the central computer controls the amount dispensed by each power dispensing station, billing, credit card verification (if necessary), identification acknowledgement of the user and overall accounting for the system. In such configurations it is the central control computer 15 that allots to each electrical power dispensing station 16 a share of the available electrical power. If the central control computer 15, the portions of the communication network between the charging stations 16 or any other portion of the infrastructure facilitating the connectivity between the charging stations becomes unoperational, the entire centrally controlled charging network becomes as well unoperational. The central computer 15 is responsible for balancing the operation of the charging network.

In figure 1 the charging stations are designated either with numeral 16 or 17 to indicate that said charging stations may be all the same in the network or they may be different in nature, such as being manufactured by different manufacturers. Although the networked charging stations may be homogeneous or heterogeneous in such centrally controlled network architecture, they all have to share at least the capability of communicating with the central computer.

In figure 1 the exemplary network 19 may be the Internet but connectivity between the charging stations 16 and the central computer 15 may be realized via any known communication standards, such as Ethernet/GSM and TCP/IP.

It is known in the art to have dynamic electric power rates where electricity may be purchased at different times according to instantaneous or short-term billing rates. The electric car charging networks can use this facility by staying in contact via a communication module (not shown in the figure) with a rate advisory service and advising the electric car user regarding the current rate, or by delaying a vehicle charge-up until a time when rates are favorable. For example, a user could plug a rechargeable electric vehicle into the charging network in the evening with instructions to hold off the beginning of charging until the rate drops under night-time loading conditions to a particular rate with further instructions to begin charging regardless of the rate by a particular time (like 3 AM for example) to make sure that the car indeed does get charged in time for use.

In the exemplary charging system of fig. 1 the central control manager tells everyone how much power they may use from the system. Without this control manager 15, the system collapses. In the exemplary architecture of Fig. 1 each charging station must be connected to the manager 15.

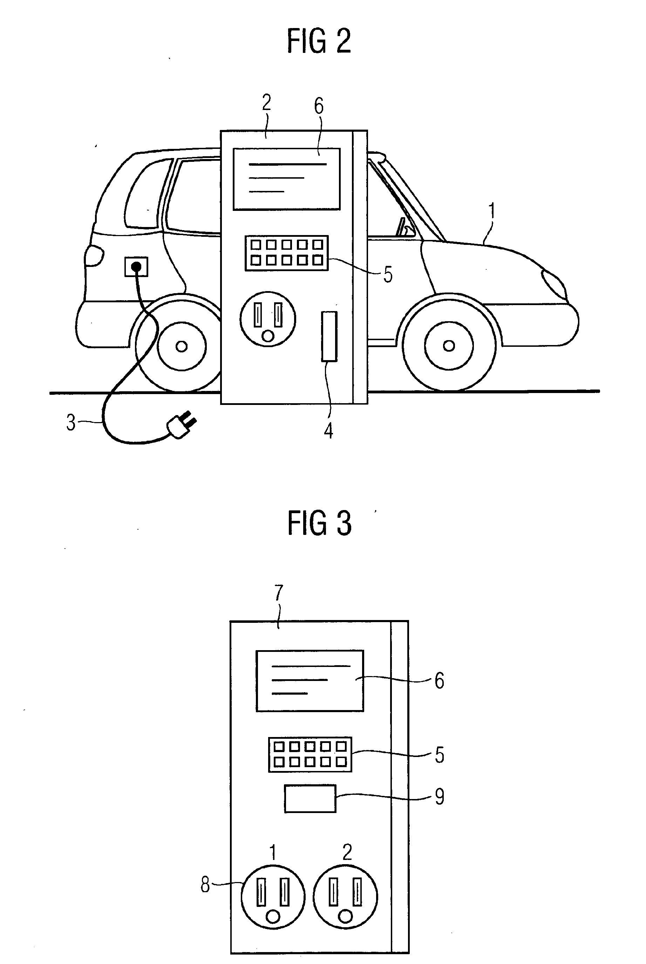

FIG. 2 shows a view of an exemplary public or private service outlet that can provide electric power to charge an electric vehicle.

A vehicle or car 1 enters the exemplary charging station and stops at an electricity dispensing outlet or charging station 2. It is of note that the charging station 2 may be identical with the charging stations 16, 17 referred to above in connection with the description made for figure 1. The charging station 16, 17 may be a public station or a private station that is only used by particular members or subscribers such as residents of an apartment complex, or it may be used by the general public at large without restrictions. Restrictions of use may be implemented based on a user's preference to buy only renewable energy, to buy only at a certain price, to buy only from a particular electrical energy distribution company, etc. After stopping, the vehicle's recharge cable 3 can be plugged into a power outlet in the charging station 2. This cable 3 can contain a plug and separate electrical safety ground, or an optional safety ground strap can be connected to the vehicle. The user then normally enters either a credit card into a card swipe 4, or member identification into a keypad 5 or other personal identification device. An optional card with an RFID chip installed containing the user's identification information may be used in either situation. This latter method is particularly useful for identifying a member of a private group of users or a subscriber to a subscriber service. An optional identification device can also be biometric such as a fingerprint reader or other biometric identification device known in the art.

The charging station 2 then applies electric power in a controlled way to the vehicle's charge cable 3 at the correct voltage (which may be selected by the user). Power is typically monitored in the charging station 2 in terms of maximum current flow and total power supplied. The charging station 2 can have an optional monitor screen 6 that can be used to communicate with the user. Any problems associated with the recharge can be placed on this monitor 6 so the user is alerted and can correct them. These can include a loose or unconnected cable, a short circuit or too low an impedance into the cable (which would attempt to draw too much current), invalid credit card, incorrect identification and the like. It is also envisioned to have a separate digital or analogue data communications circuit between the charging station 2 and the vehicle 1. This optional communications path would be useful for automatic identification and billing, control of the charging rate and charging voltage for DC chargers, and identification of problems with the charging process from the vehicle including a charging stop command from the vehicle. A separate data communications path can be useful for a "plug and charge" operation where identification and billing are handled automatically, and the vehicle electronically identifies itself to the system.

FIG. 3 shows a smaller power dispensing device that could be used in a smaller environment than a public service station. A housing 7 contains a power circuit that provides either 110V or 220V or some other standard line value of electric power. Electrical outlets 8 allow plugging in a charging cable from an electric vehicle. A keypad 5 and/or RFID reader 9 allows identification of the particular user. A screen, monitor or LED 6 can display status, billing, power dispensed or any other quantity. This screen or monitor 6 can be as large or small as desired. A metering circuit inside the device monitors the amount of power dispensed and either directly handles billing or communicates with a remote computer that handles billing. A particular remote computer could handle several of the small charging stations shown in FIG. 2.

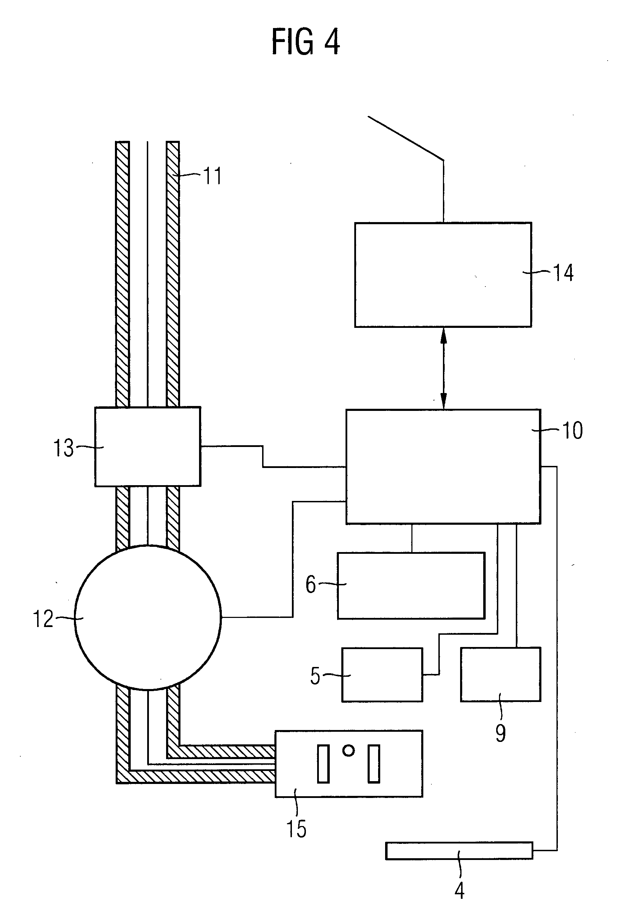

FIG. 4 shows a block diagram of an exemplary power dispensing unit designed for a public or private electric service station. A processor 10 controls the device. This processor 10 can be any commercial microprocessor, microcontroller or other processor device. A power supply 11 enters the device. This can be a conventional 110 V or 220 V source or a special voltage source. A metering circuit 12 typically measures the amount of supplied power in kilowatt hours (kWH) or other units. An electronic power switch 13 allows access to the power and is normally under the control of the processor 10. A keypad 5 and optional RFID reader 9, optional monitor screen 6 and credit card swipe 4 can also be individually supplied and connected to the processor 10. An optional communications module 14 can communicate with an external computer, server or other stations to okay and transact credit card sales, debit a user's account in a subscriber service, perform overall management services or to inquire about availability of power.

The power metering or monitoring device 12 can be similar to a standard electronic power meter known in the art. This device typically reports a continuously increasing digital number to the processor 10. The processor can note the number contained in the meter 12 when dispensing starts and again when dispensing is complete. The processor 10 subtracts the two numbers to determine the number of kilowatt hours of electricity that was dispensed. Alternatively, the meter 12 could be reset between each dispense by the processor 10 starting at zero each time. After power is switched on and metered, it can be applied to an outlet 15 for dispensing to an electric vehicle or any other device needing electric power.

The amount charged the user or debited from his or her account can be based on a fixed rate for electricity plus a surcharge in the case of a public station, or can be based on a variable rate for electricity where the exact charge may depend on the time of year, time of day and other factors. In the case of variable rate electricity, the communication module 14 determines the rate via a computer network which may be the Internet, or directly from a power company computer. This rate can be supplied dynamically to the processor 10 and can be supplied continuously without asking.

The optional communication module 14 can be any circuitry capable of communicating with other computers. The preferred case is an interface into the Internet. Communications module 14 can be a fixed or mobile telephone modem, DSL modem, cable modem, WiFi device, cellular telephone or any other communication device capable of communicating with another computer or server anywhere on one or more networks.

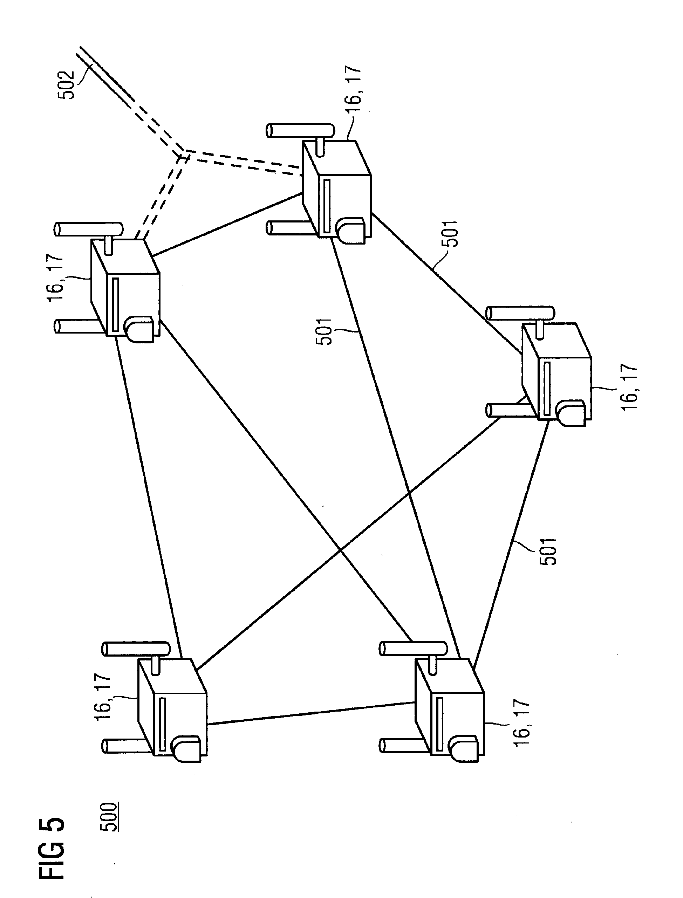

Fig. 5 illustrates a network for charging electrical cars, as proposed in accordance with an embodiment of the present invention.

The electrical car charging network 500 illustrated in figure 5 comprises a plurality of charging stations 16, 17 that are capable of communicating with each other at least via the exemplary communication protocols already mentioned. The electrical car charging network is supplied with electrical power via at least one power cable 502, supplying a variety of electrical power, such as green energy (electrical energy generated from renewable sources) or yellow (electrical energy generated from atomic power).

The electrical car charging network 500 illustrated in figure 5 is a decentralized power distribution system, in which, compared to the system illustrated in Fig. 1, a central control computer 15 is absent. The electrical car charging network 500 facilitates that the distribution of electrical energy is done in a decentralized manner, where the charging stations acquire options to charge from their neighbouring stations.

In an exemplary electrical charging network, each charging station is allotted at the beginning the same amount of options to charge. In the exemplary charging network 500 the available options are distributed between the five exemplary charging stations that are comprised in the network. Each charging station 16, 17 starts with an equal amount of 1/5^{th} of the available options. If a car comes to a charging station and requires to be charged, and the charging station's options are not sufficient, the station must acquire the necessary options to charge the car. The station acquires options to charge the car, since such options are traded between the stations. If a station has the need to acquire more options, the charging station 16 inquires if the neighbouring stations will lend it charging options. When the neighbouring station transfers the options, the charging station acquires sufficient options to charge the car to the car user's specifications.

In the exemplary network architecture of Fig. 5 no particular station has the role of managing and balancing the network, and the charging stations 16 interact with each other for balancing the amount of energy distributed through the network. In the exemplary charging network of Fig. 5 the centralized control unit 15 has been eliminated and all the communication is done between the charging units 16.

The charging units 16 illustrated in Fig. 5 are charging stations that may have the same capabilities, and they use the same power cable. There is no difference between the capabilities of the stations, whether they use mobile communication or they communicate via cable.

A condition that has to be met by the network 500 is that the total sum of power which is used in the whole network should be limited by the available options to charge. Irrespective to where a charging station is located, should the charging station whish to charge an incoming car, and it only has available at that time an insufficient amount of options, the charging station needs to seek the options elsewhere. The neighbouring stations may provide the necessary options, should they have them available.

The electrical car charging network includes heterogeneous charging spots that may be distributed within the existing infrastructures, and placed in shops, houses, parking spaces, etc. The electrical charging network must comply at least with the following requirements: the electrical car charging stations must communicate with each other, and the charging stations must manage the total available options to charge in an efficient distributive manner.

The first requirement is realized with the help of well-known standards, such as mobile or cabled communication, that are used by the charging stations 16 to communicate with each other. The present invention proposes a solution to how to realize the second requirement, of managing the total available options to charge in an efficient distributive manner.

The present invention proposes an exemplary power management system 500 which is based on a service oriented peer-to-peer network architecture.

In accordance with the present invention, if a car arrives at one of the charging stations 16 in network 500, the charging station in question assesses if it possesses sufficient options to charge at that time to satisfy the electrical car's request for power. Should the charging station posses sufficient allotment of options at that time to satisfy the request, then the car is charged. Should the car charging station realize that its allotment of options to charge is not sufficient at that time to satisfy the request, then said options to charge need to be found elsewhere. As such, the charging station will start to interrogate its neighbour charging stations regarding their availability of options, the time frame of the availability, the price, and source of the power and any other details that might be of interest to the purchaser of electrical power. Alternatively, the charging station may send a request to other charging stations in the network that are not necessarily its neighbours but that are located on the same power cable as itself. In response, some of the inquired charging stations may indicate their availability to lend options to charge to the inquiring charging station, provided that at that time they are not responding themselves to a request for electrical power. The inquiring charging station receives the responses and collects the information, and based on preset criteria will select from which of the respondents it accepts to receive the necessary options to charge. Alternatively, information regarding power availability, source, costs, etc. may be made available to the energy purchaser and it will be the purchaser who can make the decision from which charging station to buy the electrical power. Once the options to charge or the actual power to charge become available, the charging station charges the car. Upon completing the charge, the charging station returns the received options to its lender along with any monetary credit that is due.

By practicing the sequence described above, the electrical car charging network operates in a distributed way. The need for a centralized control computer that manages the network and supervises the network is eliminated.

As mentioned each charging station 16 has capabilities that go beyond just providing electricity to a car that it is plugged in. Since the network 500 is a heterogeneous system, the devices comprised in the network can be completely different from each other. In principle the charging stations act all alike in the sense that they are charging electricity stations, like gas stations but instead provide electrical energy. They are all equipped with a plug via which the car communicates the charging station how much energy it requires.

The charging stations are "different" in the sense that they can come from different manufacturers, but they are all charging stations that are connected to a cable from which they draw electrical power.

In the centralized network architecture, if a car is coming, the charging station communicates to the centralized computer that a car has arrived that wants a certain quantity of power. The central control server is a server who keeps track about how much each station wants to charge. It is the central computer that allows each charging station how much to charge. In the centralized configuration the central computer is always needed so the system can work.

In contrast in a network such is represented in fig. 5 each charging station may potentially charge more than its corresponding share, since charging stations can borrow from other stations that are not currently charging options for charge and as such at one given time a charging station may have available multiples shares of charging options. In the example illustrated in figure 5, if two charging stations are not charging at a given moment, the remaining 3 can charge potentially more.

The present heterogeneous architecture eliminates the need for the central control computer via a novel charging network design.

In the network illustrated in Fig. 5 each charging station is given automatically 1/5 of the options to charge. Since the charging station has the capability to interact with the other charging stations situated on the same power supply cable, the charging station knows which other charging stations are not currently charging. If the charging station communicates with them and if they are not currently charging they may agree to lend their options. In exchange, the charging station may even pay the lending charging stations for the options loaned. By acquiring more options, more power can be provided in a shorter time to the car at the charging station. Each charging station in network 500 can have a protocol that regulates what has been borrowed from which charging station and for how long, and how much the receiving charging station should pay for it. Since the car that is charged pays the charging station, and since the charging station is interested to charge the car as fast as possible, even if the charging station has to pay small amounts to the charging stations that lend it the options to charge, it is still a viable economical proposition for the charging station. Especially since the charged car may be willing to pay more to be charged faster.

The charging network may as well be heterogeneous since the five exemplary charging stations may belong to different companies who own the charging stations. Each of these charging stations is equipped so it can communicate with its neighbours. When a car comes, they ask all their neighbours for options, since the goal is to charge the car as fast as possible.

In an exemplary embodiment, two of the charging stations 16 of network 500 may be located in a shopping mall, two in a near by parking lot, and one at the near by gas station. The system can be always managed in a distributed way.

The present invention facilitates that the heterogeneous power charging stations work together to realize the function of charging the cars in different locations due to a unitary method of controlling a network of charging stations that when applied to the various charging station makes that they all work together irrespective of their manufacturing, or varied capabilities.

In terms of hardware each charging station 16 of network 500 has a basic implementation as described above in connection with figures 3 and 4. It has at least a computing device main mother board and memory, and other hardware that facilitates communication that may be Ethernet or mobile communication. The embedded device responsible for managing the electrical parts, the communication with the car to be charged, the plug, the billing system, the identification requirements, is a small computer that has a memory, a computing system that is Linux or Windows based, that is able to manage the electrical part, and acts as a electrical controller. To this controller, there should be available communication parts such as Ethernet cards with ports, that enable communication with others. Mobile phone like communication system via an antenna and dedicated cards also facilitate communication between the charging stations. Other ways known in the art for realizing the communication may be utilized.

A charging station is envisioned to be implemented as having enough memory and processing power so that via the mobile communication devices or Ethernet cards the charging station should be able to communicate with other stations. Communication protocols should also be stored in the charging spot, such as Ethernet or mobile communication protocols.

In terms of software implementation of the charging stations, any solution known to a person skilled in the art is considered to fall within the scope of the present description.

The charging stations 16 of network 500 may be implemented so that they are capable of other further features such as power trading/bidding where consumers may propose different process, or to be part of cooperation groups where each group forms its own pool of providers/consumers. Furthermore, the charging stations may also be responsible for specific tasks, such as authentication, history tracking, etc.

In addition to the method to control the functioning of a heterogeneous network of the charging stations, the proposed network architecture 500 also realizes at least three other communication protocols. The first protocol realizes a boot-strapping mechanism, so that any charging spot is configured automatically by receiving an IP address along with a list of its neighbours it can communicated with. The second protocol realizes a version of the peer-to-peer network which ensures that each charging station can at least indirectly reach any other one. A third protocol realizes the way the charging spots cooperate during charging operations as well during the cases when the overall network power goes up and down. The concrete implementation of these protocols depends on the overall system design. Further, a person skilled in the art would be aware of modalities regarding how the protocols mentioned above can be enhanced/extended depending on the features wanted to be obtained.

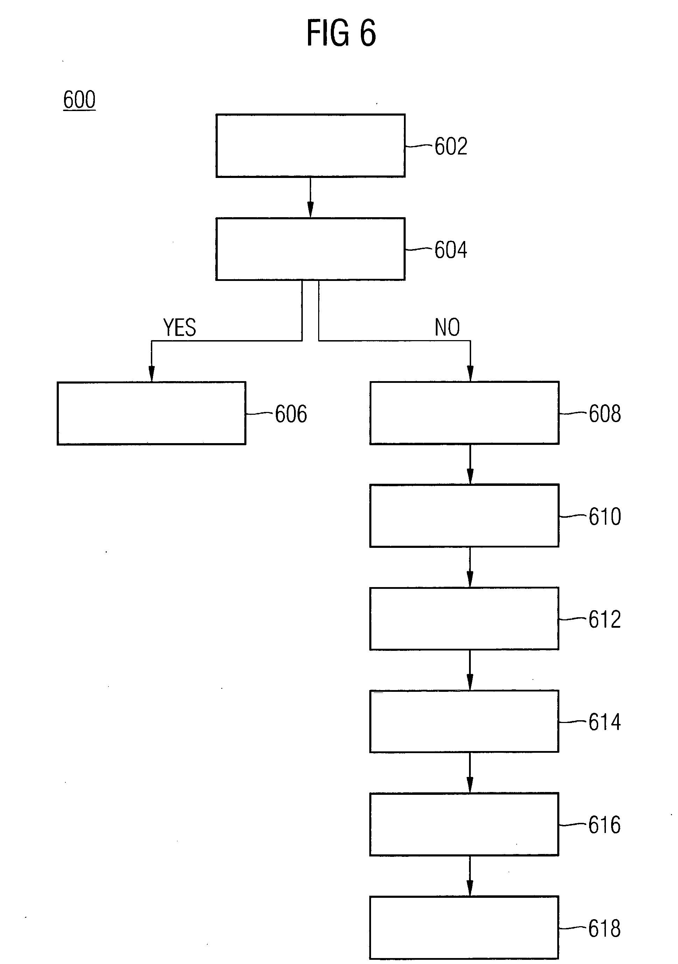

Referring now to Fig. 6, Fig. 6 is a flow chart representation of the method for controlling the functioning of a heterogeneous network of charging stations for electric cars, in accordance with an embodiment of the present invention.

In accordance with method 600 illustrated in Fig. 6 the method for controlling the functioning of a heterogeneous network for charging electrical cars is practiced in a heterogeneous network for charging electrical cars that comprises a plurality of electrical car charging stations, the electrical car charging stations being capable of communicating among each other.

The method for controlling the functioning of a heterogeneous network for charging electrical cars comprises the step 602 of receiving a request for charging an electrical car at at least one electrical car charging station pertaining to a plurality of electrical car charging stations. The request receiving station assesses in step 604 if the electrical car charging station possesses sufficient options to meet the request. If the requested amount of options is available at the charging station, the electrical car is charged in step 606. If the amount of options is not available at the charging station, the method further comprises the steps of interrogating, in step 608, other electrical charging stations of the plurality of electrical car charging stations regarding their availability of options for charging, collecting in step 610 information received from the other electrical car charging stations regarding their options availability, selecting, in step 612, based on the information received, at least one electrical car power charging station from which to receive options to charge, based on at least one of a plurality of selection criteria, accepting, in step 614 to receive the options to charge from the selected electrical car power charging station, charging at step 616, the electrical car at the at least one electrical car charging station, and returning, in step 618, the received options to charge to the electrical car charging stations that have made available the options.

The request for controlling the functioning of a heterogeneous network for charging electrical cars comprises at least one of an amount of electrical energy required, a desired time frame for charging the electrical car, cost indicators for the electrical power, and mode of payment. The information received by the at least one electrical car charging station from other electrical car charging stations comprises at least one amount of electrical energy available, time frame for electrical energy availability, cost indicators for the available electrical power, and preferred mode of payment.

The plurality of criteria is set by the user of the electrical car. The set of criteria comprises at least one of the user's preference for clean energy, the users preferred mode of payment, information regarding the users belonging to a select group of users, the time frame and power level at which the electrical car should be charged, etc.

The step 608 of interrogating other electrical charging stations of the plurality of electrical car charging stations regarding their options availability comprises sending individual inquiries to some electrical charging station in the heterogeneous network for charging electrical cars.

The step of 610 of collecting the information comprises exchanging information via a communication means. The step of interrogating other electrical charging stations is facilitated by the implementation of a peer-to-peer communication network. The method of the present invention further comprises realizing a boot-strapping mechanism, wherein an electric car charging station is configured automatically by receiving an IP address along with a list of its neighbours it can communicate with. Each electrical charging station reaches and is capable of communication with some other electrical car charging station in the network.

The heterogeneous network for charging electrical cars presented here for supplying power to an electric vehicle on a parking space can be implemented in multi-story car parks, in car parks of supermarkets, hotels, airports, sports stadiums and the like.

The heterogeneous network for charging electrical cars presented here has the advantage of simplicity of implementation since it does not need to be provided with a central control computer. The present network for charging electrical cars relies on a simple protocol that implies a small number of steps executed by a method that requests the options to charge the car, grants the option to charge the car, and returns the option to charge the car. The network for charging electrical cars is also characterized by robustness since the breakdown of stations induces that only the options at these stations are unavailable. The network for charging electrical cars of the present invention is further characterized by locality since each station has to communicate only with its direct neighbours, and no global communication is necessary. Implicitly the decisions regarding options to charge availability, i.e. electrical energy availability are also local decisions.

The present invention may take the form of a system (not illustrated in the drawings) comprising at least a data bus system, a memory coupled to the data bus system, wherein the memory includes computer usable program code, a processing unit coupled to the data bus system, wherein the processing unit executes the computer usable program code to receive a request for charging an electrical car at at least one electrical car charging station of the plurality of electrical car charging stations, and to assess by the at least one of the electrical car charging stations if the electrical car charging station possesses sufficient options to meet the request. If said amount of options is available at the charging station, the electrical car is charged, and if the amount of options is not available at the charging station, the method further comprises the steps of interrogating other electrical charging stations of the plurality of electrical car charging stations regarding their availability of options for charging, collecting information received from the other electrical car charging stations regarding their options availability, selecting, based on the information received, at least one electrical car power charging station from which to receive options to charge, based on at least one of a plurality of selection criteria, accepting to receive the options to charge from the selected electrical car power charging station, charging the electrical car at the at least one electrical car charging station, and returning the received options to charge to the electrical car charging stations that have made available the options.

Furthermore, the present disclosure may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer― readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fibre cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

A computer program product in accordance with the present invention comprises a tangible computer usable medium including computer usable program code, the computer usable program code for controlling the functioning of a heterogeneous network for charging electrical cars, wherein the heterogeneous network for charging electrical cars comprises a plurality of electrical car charging stations, and wherein the electrical car charging stations are capable of communicating among each other. The method for controlling the functioning of a heterogeneous network for charging electrical cars of the present invention assumes that the heterogeneous network for charging electrical cars comprises a plurality of electrical car charging stations, that each of the plurality of electrical car charging stations is in possession of a limited amount of options to charge electrical power, and the electrical car charging stations are capable of communicating among each other. The method comprises receiving a request for charging an electrical car at at least one electrical car charging station of said plurality of electrical car charging stations, assessing by the at least one electrical car charging station if the electrical car charging station possesses sufficient options to meet the request, wherein if the amount of options is available at the charging station, the electrical car is charged, and if the amount of options is not available at the charging station, the method further comprises the steps of: interrogating other electrical charging stations regarding their availability of options for charging, collecting information received from the other electrical car charging stations regarding their options availability, selecting, based on the information received, at least one electrical car power charging station from which to receive options to charge, based on at least one of a plurality of selection criteria, accepting to receive the options to charge from the selected electrical car power charging station, charging the electrical car at the at least one electrical car charging station, and returning the received options to charge to the electrical car charging stations that have made available said options.

A computer program product that executes the method of the present invention resides in an embedded hardware module in the studied devices.

## Claims

1. A method for controlling the functioning of a heterogeneous network for charging electrical cars,
wherein the heterogeneous network for charging electrical cars comprises a plurality of electrical car charging stations (16, 17),
wherein each of said plurality of electrical car charging stations (16, 17) is in possession of a limited amount of options to charge electrical power, and wherein said electrical car charging stations (16, 17) are capable of communicating among each other,
the method comprising:
- receiving (602) a request for charging an electrical car (1) at at least one electrical car charging station of said plurality of electrical car charging stations (16, 17),
- assessing (604) by said at least one of said electrical car charging stations (16, 17) if the electrical car charging station possesses sufficient options to meet the request,
the method being **characterized in that**: if said amount of options is available at the charging station (16, 17) according to the assessing (604), the electrical car (1) is charged (606), and
if said amount of options is not available at the charging station (16,17) according to the assessing (604), the method further comprises the steps of:
- interrogating (608) other electrical charging stations (16, 17) of said plurality of electrical car charging stations (16, 17) regarding their availability of options for charging;
- collecting (610) information received from the other electrical car charging stations (16, 17) regarding their options availability;
- selecting (612), based on the information received, at least one electrical car power charging station (16, 17) from which to receive options to charge, based on at least one of a plurality of selection criteria;
- accepting (614) to receive the options to charge from the selected electrical car power charging station (16, 17) ;
- charging (616) the electrical car (1) at the at least one electrical car charging station (16, 17), and
- returning (618) the received options to charge to the electrical car charging stations (16, 17) that have made available said options.

2. The method of claim 1, wherein the stations (16, 17) that loaned their options are either unavailable till the loaned options are returned, or the stations (16, 17) attempt to borrow options from the other car charging stations.

3. The method of claim 1, wherein said request for charging an electrical car (1) comprises at least one of amount of electrical energy required, desired time frame for charging the electrical car, cost indicators for the electrical power, mode of payment.

4. The method of claim 1, wherein the information received by the at least one electrical car charging station (16, 17) from other electrical car charging stations (16, 17) comprises the amount of options available, a time frame for the options' availability, cost indicators for the available options, and/or a preferred mode of payment for the loaned options.

5. The method of claim 1, wherein said plurality of selection criteria is set by a user of the electrical car (1).

6. The method of claim 5, wherein said set of selection criteria comprises at least one of the user's preference for clean energy, the user's preferred mode of payment, the user's belonging to a selected group of users, a time frame and power level at which the electrical car is to be charged.

7. The method of claim 1, further comprising controlling said heterogeneous network for charging electrical cars (1).

8. The method of claim 1, wherein the step of interrogating other electrical charging stations (16, 17) of said plurality of electrical car charging stations (16, 17) regarding their availability of options to charge comprises sending an inquiry to other electrical charging stations (16, 17) in said heterogeneous network for charging electrical cars.

9. The method of claim 1, wherein each interrogated electrical car charging station (16, 17) shares information regarding the availability of options with the at least one electrical car charging station (16, 17) of said plurality of electrical car charging stations (16, 17) receiving the request for charging a power supply cable.

10. The method of claim 1, wherein the step of collecting said information comprises exchanging information via mobile communication, and/or an available network.

11. The method of claim 1, wherein the electrical charging stations are arranged in a peer-to-peer communication network.

12. A heterogeneous network for charging electrical cars, comprising a plurality of electrical car charging stations (16, 17) capable of communicating among each other,
wherein said heterogeneous network for charging electrical cars is configured to:
- receive (602) a request for charging an electrical car (1) at at least one electrical car charging station of said plurality of electrical car charging stations (16, 17); and
- wherein said at least one of said electrical car charging stations (16, 17) is configured to assess (604) if the electrical car charging station possesses sufficient options to meet the request above,
**characterized in that**
said at least one of said electrical car charging stations (16, 17) is configured to:
- charge (606) the electrical car (1) if said amount of options is available at the charging station (16, 17) according to the assessment (604),
and is further configured, if said amount of options is not available at the electrical car charging station (16, 17) according to the assessment (604), to:
- interrogate (608) other electrical charging stations (16, 17) of said plurality of electrical car charging stations (16, 17) regarding their availability of options for charging;
- collect (610) information received from the other electrical car charging stations (16, 17) regarding their options availability;
- select (612), based on the information received, at least one electrical car power charging station (16, 17) from which to receive options to charge, based on at least one of a plurality of selection criteria;
- accept (614) to receive the options to charge from the selected electrical car power charging stations (16, 17);
- charge (616) the electrical car at the at least one electrical car charging station (16, 17), and
- return (618) the received options to charge to the electrical car charging stations (16, 17) that have made available said options.

## Patentansprüche

1. Verfahren zum Steuern der Funktion eines heterogenen Netzwerks zum Aufladen von Elektrofahrzeugen,
wobei das heterogene Netzwerk zum Aufladen von Elektrofahrzeugen mehrere Ladestationen (16, 17) für Elektrofahrzeuge umfasst,
wobei jede der mehreren Ladestationen (16, 17) für Elektrofahrzeuge über eine begrenzte Anzahl von Optionen zum Aufladen mit elektrischem Strom verfügt und wobei die Ladestationen (16, 17) für Elektrofahrzeuge in der Lage sind, miteinander zu kommunizieren,
wobei das Verfahren Folgendes umfasst:
- Empfangen (602) einer Aufforderung zum Aufladen eines Elektrofahrzeugs (1) an mindestens einer der mehreren Ladestationen (16, 17) für Elektrofahrzeuge,
- Einschätzen (604) durch die mindestens eine der Ladestationen (16, 17) für Elektrofahrzeuge, ob sie über ausreichend Optionen verfügt, um dieser Aufforderung gerecht werden zu können,
wobei das Verfahren **dadurch gekennzeichnet ist, dass**:
das Elektrofahrzeug (1), wenn diese Anzahl an Optionen gemäß der Einschätzung (604) an der Ladestation (16, 17) verfügbar ist, aufgeladen (606) wird und das Verfahren, wenn diese Anzahl an Optionen gemäß der Einschätzung (604) an der Ladestation (16, 17) nicht verfügbar ist, ferner folgende Schritte umfasst:
- Abfragen (608) anderer der mehreren Ladestationen (16, 17) für Elektrofahrzeuge bezüglich der Verfügbarkeit von Aufladeoptionen,
- Sammeln (610) der von den anderen Ladestationen (16, 17) für Elektrofahrzeuge empfangenen Informationen bezüglich der Verfügbarkeit von Optionen,
- auf der Grundlage der empfangenen Informationen Auswählen (612) mindestens einer Ladestation (16, 17) für Elektrofahrzeuge, von der Aufladeoptionen empfangen werden sollen, auf der Grundlage mindestens eines von mehreren Auswahlkriterien,
- Akzeptieren (614) des Empfangens der Aufladeoptionen von der ausgewählten Ladestation (16, 17) für Elektrofahrzeuge,
- Aufladen (616) des Elektrofahrzeugs (1) an der mindestens einen Ladestation (16, 17) für Elektrofahrzeuge und
- Zurückgeben (618) der empfangenen Aufladeoptionen an die Ladestationen (16, 17) für Elektrofahrzeuge, die diese Optionen zur Verfügung gestellt haben.

2. Verfahren nach Anspruch 1, bei dem die Stationen (16, 17), die ihre Optionen verliehen haben, entweder nicht verfügbar sind, bis die verliehenen Optionen zurückgegeben worden sind, oder versuchen, von den anderen Fahrzeugladestationen Optionen auszuleihen.

3. Verfahren nach Anspruch 1, bei dem die Aufforderung zum Aufladen eines Elektrofahrzeugs (1) die erforderliche Elektroenergiemenge, den gewünschten Zeitrahmen für das Aufladen des Elektrofahrzeugs, Kostenindikatoren für den elektrischen Strom oder/ und die Zahlungsweise umfasst.

4. Verfahren nach Anspruch 1, bei dem die Informationen, die die mindestens eine Ladestation (16, 17) für Elektrofahrzeuge von anderen Ladestationen (16, 17) für Elektrofahrzeuge empfangen hat, die Anzahl der verfügbaren Optionen, einen Zeitrahmen für die Verfügbarkeit der Optionen, Kostenindikatoren für die verfügbaren Optionen und/ oder eine bevorzuge Zahlungsweise für die verliehenen Optionen umfassen.

5. Verfahren nach Anspruch 1, bei dem die mehreren Auswahlkriterien von einem Benutzer des Elektrofahrzeugs (1) festgelegt werden.

6. Verfahren nach Anspruch 5, bei dem der Satz Auswahlkriterien die Bevorzugung sauberer Energie durch den Benutzer, die vom Benutzer bevorzugte Zahlungsweise, die Zugehörigkeit des Benutzers zu einer ausgewählten Benutzergruppe, einen Zeitrahmen oder/ und eine Ladeleistung für das Aufladen des Elektrofahrzeugs umfasst.

7. Verfahren nach Anspruch 1, das ferner das Steuern des heterogenen Netzwerks zum Aufladen von Elektrofahrzeugen (1) umfasst.

8. Verfahren nach Anspruch 1, bei dem der Schritt des Abfragens anderer der mehreren Ladestationen (16, 17) für Elektrofahrzeuge bezüglich der Verfügbarkeit von Aufladeoptionen das Senden einer Anfrage zu anderen Stromladestationen (16, 17) in dem heterogenen Netzwerk zum Aufladen von Elektrofahrzeugen umfasst.

9. Verfahren nach Anspruch 1, bei dem jede abgefragte Ladestation (16, 17) für Elektrofahrzeuge Informationen bezüglich der Verfügbarkeit von Optionen an die mindestens eine der mehreren Ladestationen (16, 17) für Elektrofahrzeuge weiterleitet, die die Aufforderung zum Aufladen eines Stromkabels empfängt.

10. Verfahren nach Anspruch 1, bei dem der Schritt des Sammelns der Informationen das Austauschen von Informationen über Mobilfunk und/ oder ein verfügbares Netzwerk umfasst.

11. Verfahren nach Anspruch 1, bei dem die Stromladestationen in einem Peer-to-Peer-Kommunikationsnetz angeordnet sind.

12. Heterogenes Netzwerk für das Aufladen von Elektrofahrzeugen, das mehrere Ladestationen (16, 17) für Elektrofahrzeuge umfasst, die in der Lage sind, miteinander zu kommunizieren,
wobei das heterogene Netzwerk zum Aufladen von Elektrofahrzeugen so konfiguriert ist, dass es:
- an mindestens einer der mehreren Ladestationen (16, 17) für Elektrofahrzeuge eine Aufforderung zum Aufladen eines Elektrofahrzeugs (1) empfängt (602),
- wobei die mindestens eine der Ladestationen (16, 17) für Elektrofahrzeuge so konfiguriert ist, dass sie einschätzt (604), ob sie über ausreichend Optionen verfügt, um der obigen Aufforderung gerecht werden zu können,
**dadurch gekennzeichnet, dass**
die mindestens eine der Ladestationen (16, 17) für Elektrofahrzeuge so konfiguriert ist, dass sie:
- das Elektrofahrzeug (1) auflädt (606), wenn diese Anzahl an Optionen gemäß der Einschätzung (604) an der Ladestation (16, 17) verfügbar ist,
und ferner so konfiguriert ist, dass sie, wenn diese Anzahl an Optionen gemäß der Einschätzung (604) an der Ladestation (16, 17) für Elektrofahrzeuge nicht verfügbar ist:
- andere der mehreren Ladestationen (16, 17) für Elektrofahrzeuge bezüglich der Verfügbarkeit von Aufladeoptionen abfragt (608),
- von den anderen Ladestationen (16, 17) für Elektrofahrzeuge empfangene Informationen bezüglich der Verfügbarkeit von Optionen sammelt (610),
- auf der Grundlage der empfangenen Informationen mindestens eine Ladestation (16, 17) für Elektrofahrzeuge, von der Aufladeoptionen empfangen werden sollen, auf der Grundlage mindestens eines von mehreren Auswahlkriterien auswählt (612),
- das Empfangen der Optionen für das Aufladen von den ausgewählten Ladestationen (16, 17) für Elektrofahrzeuge akzeptiert (614),
- das Elektrofahrzeug (1) an der mindestens einen Ladestation (16, 17) für Elektrofahrzeuge auflädt (616) und
- die empfangenen Aufladeoptionen an die Ladestationen (16, 17) für Elektrofahrzeuge zurückgibt (618), die diese Optionen zur Verfügung gestellt haben.

## Revendications

1. Procédé de contrôle du fonctionnement d'un réseau hétérogène de recharge de voitures électriques,
dans lequel le réseau hétérogène de recharge de voitures électriques comprend une pluralité de bornes de recharge de voitures électriques (16, 17),
dans lequel chacune de ladite pluralité de bornes de recharge de voitures électriques (16, 17) est en possession d'une quantité limitée d'options de charge d'énergie électrique, et
dans lequel lesdites bornes de recharge de voitures électriques (16, 17) sont capables de communiquer entre elles,
le procédé comprenant :
- la réception (602) d'une demande de recharge d'une voiture électrique (1) au niveau d'au moins une borne de recharge de voitures électriques de ladite pluralité de bornes de recharge de voitures électriques (16, 17),
- l'évaluation (604) par ladite au moins une desdites bornes de recharge de voitures électriques (16, 17) si la borne de recharge de voitures électriques possède suffisamment d'options pour répondre à la demande,
le procédé étant **caractérisé en ce que** :
si ladite quantité d'options est disponible au niveau de la borne de recharge (16, 17) d'après l'évaluation (604), la voiture électrique (1) est rechargée (606), et
si ladite quantité d'options n'est pas disponible au niveau de la borne de recharge (16,17) d'après l'évaluation (604),
le procédé comprend en outre les étapes suivantes :
- l'interrogation (608) d'autres bornes de recharge électrique (16, 17) de ladite pluralité de bornes de recharge de voitures électriques (16, 17) quant à leur disponibilité d'options de recharge ;
- la collecte (610) d'informations reçues des autres bornes de recharge de voitures électriques (16, 17) quant à leur disponibilité d'options ;
- la sélection (612), sur la base des informations reçues, d'au moins une borne de recharge de voitures électriques (16, 17) pour recevoir de celle-ci des options de recharge, sur la base d'au moins un d'une pluralité de critères de sélection ;
- l'acceptation (614) de recevoir les options de recharge de la borne de recharge d'énergie de voitures électriques (16, 17) ;
- la recharge (616) de la voiture électrique (1) au niveau de ladite au moins une borne de recharge de voitures électriques (16, 17) ; et
- le retour (618) des options de recharge reçues aux bornes de recharge de voitures électriques (16, 17) qui ont mis lesdites options à disposition.

2. Procédé selon la revendication 1, dans lequel les bornes (16, 17) qui ont prêté leurs options sont soit indisponibles jusqu'à ce que les options prêtées aient été retournées, soit les bornes (16, 17) tentent d'emprunter des options auprès des autres bornes de recharge de voitures.

3. Procédé selon la revendication 1, dans lequel ladite demande de recharge d'une voiture électrique (1) comprend au moins l'un d'une quantité d'énergie électrique requise, d'un laps de temps souhaité pour recharger la voiture électrique, d'indicateurs de coût pour l'énergie électrique, et d'un mode de paiement.

4. Procédé selon la revendication 1, dans lequel les informations reçues par ladite au moins une borne de recharge de voitures électriques (16, 17) à partir d'autres bornes de recharge de voitures électriques (16, 17) comprennent la quantité d'options disponibles, un laps de temps pour la disponibilité des options, des indicateurs de coûts pour les options disponibles, et/ou un mode de paiement préféré pour les options prêtées.

5. Procédé selon la revendication 1, dans lequel ladite pluralité de critères de sélection est définie par un utilisateur de la voiture électrique (1).

6. Procédé selon la revendication 5, dans lequel ledit ensemble de critères de sélection comprend au moins l'un parmi la préférence de l'utilisateur pour l'énergie propre, le mode de paiement préféré de l'utilisateur, l'appartenance de l'utilisateur à un groupe d'utilisateurs sélectionné, un laps de temps et un niveau d'énergie auquel la voiture électrique doit être rechargée.

7. Procédé selon la revendication 1, comprenant en outre le contrôle dudit réseau hétérogène de recharge de voitures électriques (1).

8. Procédé selon la revendication 1, dans lequel l'étape d'interrogation d'autres bornes de recharge électrique (16, 17) de ladite pluralité de bornes de recharge de voitures électriques (16, 17) quant à leur disponibilité d'options de recharge comprend l'envoi d'une demande à d'autres bornes de recharge électrique (16, 17) dans ledit réseau hétérogène de recharge de voitures électriques.

9. Procédé selon la revendication 1, dans lequel chaque borne de recharge de voitures électriques interrogée (16, 17) partage des informations relatives à la disponibilité d'options avec ladite au moins une borne de recharge de voitures électriques (16, 17) de ladite pluralité de bornes de recharge de voitures électriques (16, 17) recevant la demande de charge d'un câble d'alimentation électrique.

10. Procédé selon la revendication 1, dans lequel l'étape de collecte desdites informations comprend l'échange d'informations par l'intermédiaire d'une communication mobile et/ou d'un réseau disponible.

11. Procédé selon la revendication 1, dans lequel les bornes de recharge électrique sont agencées dans un réseau de communication pair-à-pair.

12. Réseau hétérogène de recharge de voitures électriques, comprenant une pluralité de bornes de recharge de voitures électriques (16, 17) capables de communiquer entre elles, dans lequel ledit réseau hétérogène de recharge de voitures électriques est configuré pour :
- recevoir (602) une demande de recharge d'une voiture électrique (1) au niveau d'au moins une borne de recharge de voitures électriques de ladite pluralité de bornes de recharge de voitures électriques (16, 17) ; et
- dans lequel au moins l'une desdites bornes de recharge de voitures électriques (16, 17) est configurée pour évaluer (604) si la borne de recharge de voitures électriques possède suffisamment d'options pour répondre à la demande susmentionnée,
**caractérisé en ce que**
ladite au moins une desdites bornes de recharge de voitures électriques (16, 17) est configurée pour :
- recharger (606) la voiture électrique (1) si ladite quantité d'options est disponible au niveau de la borne de recharge (16, 17) d'après l'évaluation (604),
et est en outre configurée, si ladite quantité d'options n'est pas disponible au niveau de la borne de recharge de voitures électriques (16, 17) d'après l'évaluation (604), pour :
- interroger (608) d'autres bornes de recharge électrique (16, 17) de ladite pluralité de bornes de recharge de voitures électriques (16, 17) quant à leur disponibilité d'options de recharge ;
- collecter (610) des informations reçues des autres bornes de recharge de voitures électriques (16, 17) quant à leur disponibilité d'options ;
- sélectionner (612), sur la base des informations reçues, au moins une borne de recharge d'énergie de voitures électriques (16, 17) pour recevoir de celle-ci des options de recharge, sur la base d'au moins un d'une pluralité de critères de sélection ;
- accepter (614) de recevoir les options de recharge des bornes de recharge d'énergie de voitures électriques (16, 17) sélectionnées ;
- recharger (616) la voiture électrique au niveau de ladite au moins une borne de recharge de voitures électriques (16, 17) ; et
- retourner (618) les options de charge reçues aux bornes de recharge de voitures électriques (16, 17) qui ont mis lesdites options à disposition.
